# EUROPÄISCHE PATENTSCHRIFT

(11) **EP 2 494 788 B1**
(45) Veröffentlichungstag und Bekanntmachung des Hinweises auf die Patenterteilung: **23.08.2017**
(21) Anmeldenummer: 10725626.5
(22) Anmeldetag: 18.06.2010
(51) Int. Cl.: H04Q 1/14

(54) **VERTEILEREINRICHTUNG FÜR DIE TELEKOMMUNIKATIONS- UND DATENTECHNIK**
DISTRIBUTION DEVICE FOR TELECOMMUNICATIONS TECHNOLOGY AND DATA TECHNOLOGY
RÉPARTITEUR POUR LES TÉLÉCOMMUNICATIONS ET L'INFORMATIQUE

(30) Priorität: 30.10.2009 DE 102009051314
(43) Veröffentlichungstag der Anmeldung: 05.09.2012
(73) Patentinhaber: CommScope Technologies LLC, Hickory, NC 28602 (US)
(72) Erfinder: NIJHUIS, Antony, 64397 Modautal-Brandau (DE)
(74) Vertreter: Patentanwälte Bressel und Partner mbB
(86) Internationale Anmeldenummer: PCT/EP2010/003686
(87) Internationale Veröffentlichungsnummer: WO 2011/050869

(56) Entgegenhaltungen:
- WO-A1-2004/080044
- DE-A1-102007 046 433
- DE-U1-202007 001 342

## Beschreibung

Die Erfindung betrifft eine Verteilereinrichtung für die Kommunikations- und Datentechnik, insbesondere einen Hauptverteiler.

Die Anschaltdichte von Anschlussmodulen ist in jüngster Zeit erhöht worden. Diese erhöhte Anschaltdichte bedingt jedoch neue Probleme bzw. verschärft bekannte Probleme wie beispielsweise das Übersprechen. Ein weiteres Problem ist die erhöhte Masse aufgrund der Erhöhung der Anzahl der Rangierverdrahtungen, das heißt die Gestelle müssen im Vergleich zu herkömmlichen Verteilereinrichtungen höhere Massen tragen. Des Weiteren wird bei einer sehr hohen Anschaltdichte eine Umrangierung immer schwieriger.

Bei Hauptverteilern existieren im Wesentlichen zwei Varianten, nämlich Wandverteiler und Waagerecht-Senkrecht-Verteiler. Bei Wandverteilern befinden sich die Anschlussmodule für die Teilnehmer und die Anschlussmodule für die Dienste auf der gleichen Seite. Bei Waagerecht-Senkrecht-Verteilern befinden sich diese auf sich gegenüberliegende Seiten, wobei zwischen den Seiten rangiert wird.

Das Dokument WO2004/080044, (Krone GMBH) publiziert am 16-09-2004, offenbart zusätzlich eine Verteilereinrichtung für die Telekommunikations. Der Erfindung liegt das technische Problem zugrunde, eine Verteilereinrichtung zu schaffen, mittels derer im Mittel die Rangierung vereinfacht wird und die Länge der Rangierleitungen bzw. -verdrahtungen reduziert wird.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu umfasst die Verteilereinrichtung für die Telekommunikations- und Datentechnik eine Vielzahl von Anschlussmodulen (vorzugsweise Aderanschlussmodulen) für Teilnehmerleitungen und eine Vielzahl von Anschlussmodulen (vorzugsweise Aderanschlussmodulen) für Dienste, wobei über die Verteilereinrichtung mindestens zwei verschiedene Dienste einer Teilnehmerleitung wahlweise zugeordnet werden können, wobei die Anschlussmodule der Teilnehmerleitungen mit den Anschlussmodulen der Dienste elektrisch über Rangierverbindungen verbunden sind, wobei den verschiedenen Diensten jeweilige Anschlussmodule zugeordnet sind, wobei die einzelnen Anschlussmodule der verschiedenen Dienste abwechselnd unter Berücksichtigung ihrer jeweiligen Gesamtanzahl matrixförmig auf einer Anschlussseite der Verteilereinrichtung angeordnet sind. Hierdurch wird erreicht, dass jeweils in der Nähe eines Anschlussmoduls für die Teilnehmerleitungen sich Anschlussmodule aller verfügbaren Dienste befinden, so dass die Rangierverbindungen sehr kurz gehalten werden können. Die Rangierverbindungen werden dabei vorzugsweise mittels Rangierdrähten bzw. -leitungen gebildet. Die Anschlussmodule können beispielsweise auch aus zwei oder mehreren Anschlussleisten zusammengesetzt sein. Die jeweilige Gesamtanzahl der Anschlussmodule für die verschiedenen Dienste kann unterschiedlich groß sein, beispielsweise weil einzelne Dienste stärker nachgefragt sind. Weiter ist anzumerken, dass typischerweise die Anzahl der Anschlussmodule der Teilnehmerleitungen gleich der Anzahl der Anschlussmodule der Dienste ist. Es ist jedoch auch möglich, einzelne noch nicht benötigte Anschlussmodule der Dienste auszusparen und erst bedarfsweise dann zu montieren. Weiter ist es denkbar, die Anschlussmodule für die verschiedenen Dienste unterschiedlich farblich auszubilden, so dass für einen Service-Techniker die Funktion der einzelnen Anschlussmodule schnell und einfach erkennbar ist.

In einer weiteren Ausgestaltung der Erfindung sind die Anschlussmodule für die Teilnehmerleitungen auf der gleichen Anschlussseite der Verteilereinrichtungen angeordnet wie die Anschlussmodule für die Dienste, wobei zwischen Reihen oder Spalten der Anschlussmodule der Dienste Reihen oder Spalten der Anschlussmodule der Teilnehmerleitungen angeordnet sind. Dies stellt eine im Aufbau übersichtliche Variante dar, die bereits erheblich Rangierverdrahtung sparen kann.

In einer alternativen Ausführungsform sind die Anschlussmodule für die Teilnehmerleitungen auf der gleichen Anschlussseite der Verteilereinrichtung angeordnet wie die Anschlussmodule für die Dienste, wobei zwischen zwei Anschlussmodulen für die Dienste sowohl in vertikaler als auch in horizontaler Richtung jeweils ein Anschlussmodul der Teilnehmerleitungen angeordnet ist. Hierdurch ergibt sich ein Schachbrettmuster der Anschlussmodule für die Teilnehmerleitungen und Dienste, wobei damit extrem kurze Rangierstrecken erreichbar sind.

In einer weiteren Ausführungsform ist mindestens einer der Dienste in verschiedene Sub-Dienste unterteilt, wobei den Sub-Diensten jeweils Anschlussmodule zugeordnet sind, wobei die Anschlussmodule der Sub-Dienste unter Berücksichtigung ihrer jeweiligen Gesamtanzahl abwechselnd angeordnet sind.

In einer weiteren Ausführungsform ist mindestens ein Dienst und/oder ein Sub-Dienst verschiedenen Anbietern zugeordnet, wobei die Anschlussmodule der Dienste verschiedener Anbieter unter Berücksichtigung ihrer jeweiligen Gesamtanzahl abwechselnd an der Verteilereinrichtung angeordnet sind.

In einer weiteren bevorzugten Ausführungsform sind die Anschlussmodule mindestens eines Dienstes fest mit einer Elektronikeinheit verkabelt.

Die Erfindung wird nachfolgend anhand bevorzugter Ausführungsbeispiele näher erläutert. Die Figuren zeigen:
- Figur 1: eine beispielhafte Belegung mit Anschlussmodulen einer ersten Verteilereinrichtung mit vier verschiedenen Diensten,
- Figur 2: eine beispielhafte Belegung mit Anschlussmodulen einer zweiten Verteilereinrichtung mit drei Diensten,
- Figur 3: eine schematische Schaltungsanordnung der Verteilereinrichtung gemäß Figur 2,
- Figur 4: eine beispielhafte Belegung mit Anschlussmodulen einer dritten Verteilereinrichtung mit drei Diensten mit unterschiedlicher Gesamtanzahl der Anschlussmodule für die verschiedenen Dienste und
- Figur 5: eine beispielhafte Belegung mit Anschlussmodulen einer weiteren Verteilereinrichtung mit drei Diensten.

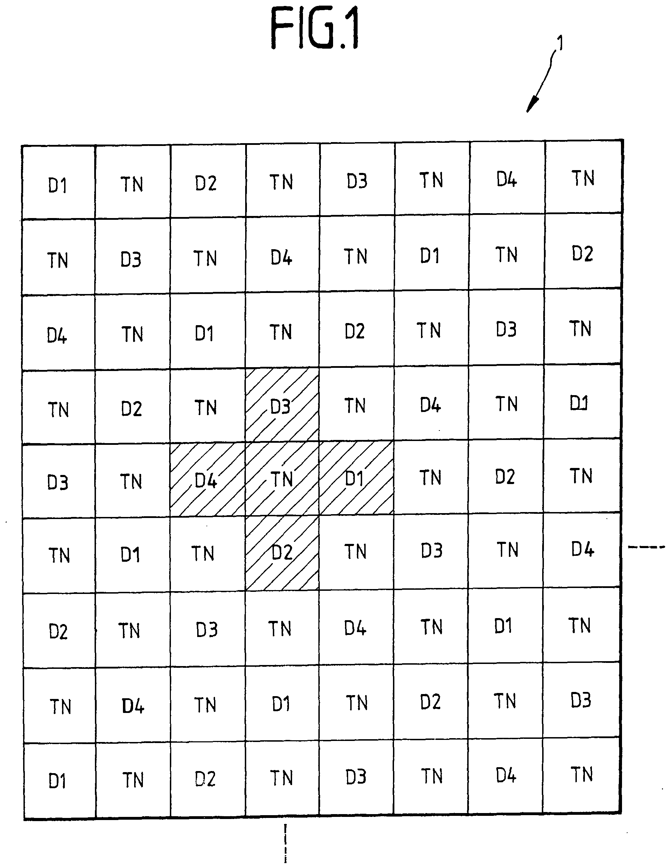

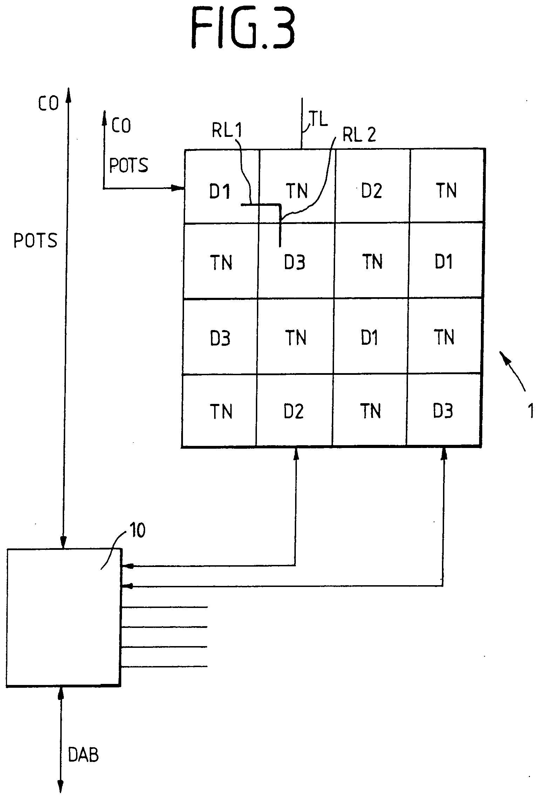

In der Figur 1 ist schematisch eine Verteilereinrichtung 1 dargestellt, bei der die Anschlussmodule TN der Teilnehmerleitungen und die Anschlussmodule D1 - D4 der Dienste auf der gleichen Anschlussseite der Verteilereinrichtung 1 angeordnet sind (Wandverteiler). Dabei sei angenommen, dass vier verschiedene Dienste angeboten werden wie beispielsweise POTS (Plain Old Telephone Service), ISDN, XDSL und ein weiterer Dienst. Jedem Dienst ist jeweils ein Anschlussmodul D1 - D4 zugeordnet, wobei die Anschlussmodule des ersten Dienstes mit D1, des zweiten Dienstes mit D2 und so weiter bezeichnet sind. Dabei sei weiter angenommen, dass bei der Planung der Verteilereinrichtung von einer gleichmäßigen Nutzung aller vier Dienste durch Teilnehmer ausgegangen wird (jeweils 25 %). Entsprechend ist die Gesamtanzahl der jeweils für die einzelnen Dienste benötigten Anschlussmodule D1 - D4 gleich. Diese Anschlussmodule D1 - D4 werden nun abwechselnd in horizontaler und vertikaler Richtung angeordnet, wobei zwischen zwei Anschlussmodulen D1 - D4 der Dienste jeweils ein Anschlussmodul TN der Teilnehmerleitungen sowohl in horizontaler wie auch in vertikaler Richtung angeordnet ist. Diese sind also schachbrettmusterartig angeordnet. Dabei durchlaufen die Anschlussmodule D1 - D4 von links nach rechts den Index vorwärts (1, 2, 3, 4 für die erste Reihe) und von oben nach unten rückwärts (1, 4, 3, 2, 1 für die erste Spalte). Durch die Anordnung wird erreicht, dass zu jedem Anschlussmodul TN der Teilnehmerleitungen (bei Vernachlässigung der Anschlussmodule an den Rändern) senkrecht und waagerecht Anschlussmodule D1 - D4 für alle vier Dienste benachbart sind. Zur Verdeutlichung ist ein Anschlussmodul TN für eine Teilnehmerleitung mit den benachbarten Anschlussmodulen D1 - D4 durch Schraffur hervorgehoben. Dies ermöglicht extrem kurze Rangierlängen bei einer Änderung eines einem Teilnehmer zugeordneten Dienstes. Möchte ein Teilnehmer von Dienst 1 zu Dienst 2 wechseln ist das dazugehörige Anschlussmodul D2 in seiner unmittelbaren Nähe. Die Umrangierung wird später noch anhand von Figur 3 näher erläutert.

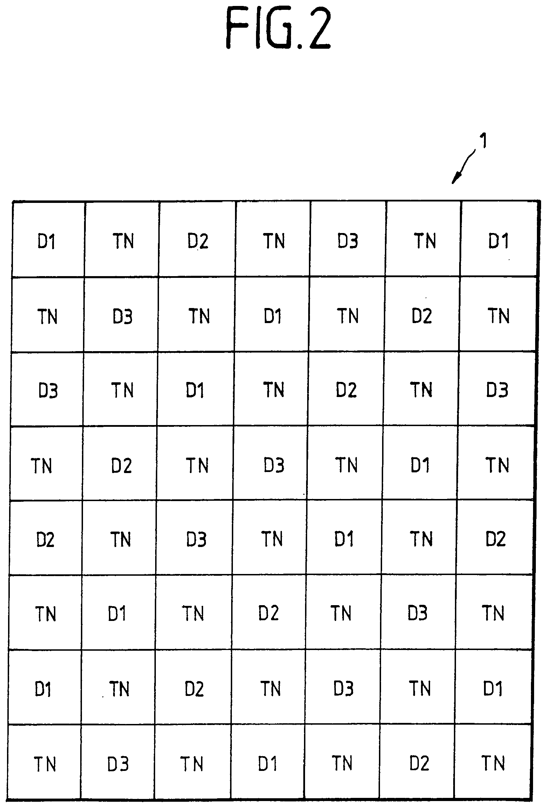

In der Figur 2 ist wieder eine Verteilereinrichtung 1 dargestellt, bei der die Anschlussmodule TN der Teilnehmerleitungen und Anschlussmodule D1 - D3 von drei Diensten an einer gemeinsamen Anschlussseite angeordnet sind. Die Anschlussmodule TN und die Anschlussmodule D1 - D3 sind wieder schachbrettmusterförmig angeordnet. Prinzipiell kann auf die Ausführungen zu Figur 1 Bezug genommen werden, wobei auch wieder in unmittelbarer Nachbarschaft zu jedem Anschlussmodul TN jeweils ein Anschlussmodul D1 - D3 jedes Dienstes angeordnet ist.

Weiter sei angemerkt, dass die einzelnen Dienste noch einmal in Sub-Dienste unterteilt sein können. Beispielsweise kann der Dienst XDSL unterteilt sein in "ADSL + POTS", "ADSL + ISDN", "ADSL mit VoIP", "VDSL" .... Sei angenommen, dass XDSL der dritte Dienst sei und vier Sub-Dienste ausgebildet werden, so werden die Anschlussmodule D3 entsprechend in D₃₁, D₃₂, D₃₃ und D₃₄ Anschlussmodule unterteilt, die dann unter Berücksichtigung ihrer jeweiligen Gesamtanzahl abwechselnd als D3 angeordnet werden. Beispielsweise wäre das linke Anschlussmodul D3 in der dritten Reihe in Figur 2 ein D₃₁- und das rechte Anschlussmodul D3 in der dritten Reihe ein D₃₂-Anschlussmodul. Entsprechend können die Dienste und/oder Sub-Dienste für unterschiedliche Anbieter (zum Beispiel ILEC und CLEC Incumbent Local Exchange Carrier, Competitive Local Exchange Carrier) unterteilt werden. Ziel ist es jeweils, die verschiedenen Anschlussmodule D1 - D3 für die Dienste gleichmäßig über die Fläche der Verteilereinrichtung 1 zu verteilen, so dass der Weg von einem Anschlussmodul TN zu einem Anschlussmodul D1 - D3 eines bestimmten Dienstes (Sub-Dienstes, Anbieter) jeweils möglichst kurz ist.

Anhand von Figur 3 soll eine mögliche Umrangierung kurz erläutert werden. Die Verteilereinrichtung 1 entspricht verkürzt der Verteilereinrichtung 1 der Figur 2. Dabei sei angenommen, die Anschlussmodule D1 stellen den Dienst POTS, die Anschlussmodule D2 den Dienst ISDN und die Anschlussmodule D3 den Dienst XDSL zur Verfügung. Die Anschlussmodule D1 sind mit einer Vermittlungsstelle CO (Central Office) verbunden. Die Anschlussmodule D2, D3 sind hingegen mit einer Elektronikeinheit 10 verkabelt, wobei aus Übersichtsgründen jeweils nur eine Verkabelung dargestellt ist. Die Elektronikeinheit 10 ist ebenfalls mit der Vermittlungsstelle CO verbunden sowie mit einem Dienstanbieter DAB. In der Elektronikeinheit 10 können dann POTS, ISDN und/oder XDSL-Daten kombiniert und/oder getrennt werden.

In der Ausgangssituation ist eine der Teilnehmerleitungen TL mit dem Anschlussmoduls TN der Teilnehmerleitungen links in der oberen Reihe der Verteilereinrichtung 1 verbunden und über eine erste Rangierleitung RL1 mit dem Anschlussmodul D1 des ersten Dienstes verbunden. Dabei sei angemerkt, dass die Anschlussmodule TN, D1 - D3 vorzugsweise Aderanschlusskontakte aufweisen (zum Beispiel Schneid-Klemm-Kontakte oder Wire-Wrap-Kontakte), an die jeweils Doppeladern anschließbar sind. Beispielsweise weist jedes Anschlussmodul TN, D1 - D3 Aderanschlusskontakte für 20 Doppeladern auf. Möchte nun der Nutzer einen XDSL-Dienst nutzen (zum Beispiel ADSL + POTS), so wird eine weitere Rangierleitung RL2 von den Aderkontakten der Teilnehmerleitung TL zu freien Aderanschlusskontakten des darunter angeordneten Anschlussmoduls D3 des Dienstes XDSL gezogen. Über die Vermittlungsstelle CO oder eine andere übergeordnete Einheit wird dann der Teilnehmerleitung TL eine andere interne Nummer zugeordnet, nämlich die von den Aderanschlusskontakten des Anschlussmoduls D3. Die Rangierleitung RL1 kann entfernt werden, so dass die Aderanschlusskontakte des Anschlussmoduls D1 wieder frei beschaltbar sind. Somit stehen dem Teilnehmer der Teilnehmerleitung TL die Dienste XDSL zur Verfügung. Die zugehörigen POTS-Daten für den Teilnehmer leitet dann die Vermittlungsstelle CO nicht direkt an das Anschlussmodul D1 weiter sondern aufgrund der neuen internen Nummer an die Elektronikeinheit 10, wo diese mit den ADSL-Daten von Dienstanbieter DAB kombiniert und an das Anschlussmodul D3 übertragen werden. Somit kann mit sehr geringem Aufwand und kurzen Rangierleitungen rangiert werden, wobei durch die kurzen Rangierleitungen die von der Verteilereinrichtung 1 zu tragende Masse erheblich reduziert wird.

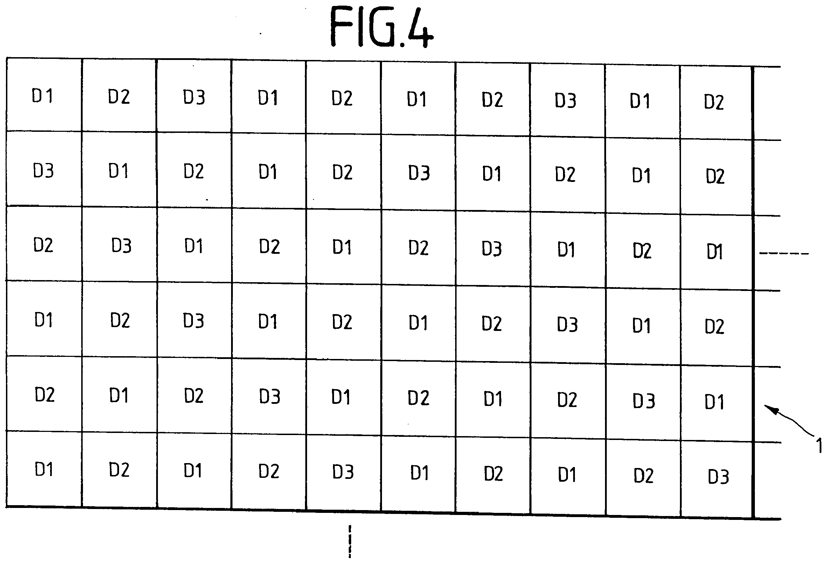

In der Figur 4 ist eine weitere Ausführungsform der Verteilereinrichtung 1 dargestellt. Im Gegensatz zu den Ausführungsformen gemäß den Figuren 1 - 3 handelt es sich hierbei um eine Anordnung, wo die die Anschlussmodule D1 - D3 der Dienste an einer Anschlussseite angeordnet sind, die einer Anschlussseite der Anschlussmodule für die Teilnehmerleitungen gegenüberliegt (Waagerecht-Senkrecht-Verteiler). Als weitere Besonderheit gegenüber den Ausführungsformen nach den Figuren 1 - 3 ist, dass die Gesamtanzahl der jeweiligen Anschlussmodule D1 - D3 unterschiedlich groß ist. Dabei wurde angenommen, dass die Verteilung der Dienste nach folgendem Verhältnis erfolgt:
D1 = 40 %
D2 = 40 %
D3 = 20 %

Entsprechend ist die Gesamtanzahl der Anschlussmodule D1, D2 doppelt so groß wie die Anzahl der Anschlussmodule D3. Auch hier werden die Anschlussmodule D1 - D3 unter Berücksichtigung ihrer jeweiligen Gesamtanzahl abwechselnd angeordnet. Dies führt zu einer gleichmäßigen Verteilung der Anschlussmodule D1 - D3.

Somit ist der jeweilige Rangierweg von einem nicht dargestellten Anschlussmodul TN der Teilnehmer im Mittel relativ kurz zu einem der Anschlussmodule D1 - D3.

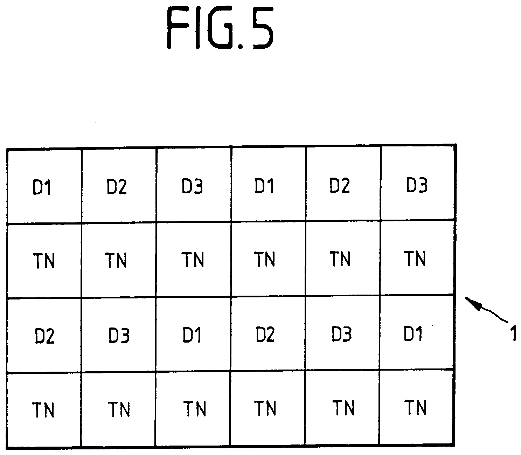

In der Figur 5 ist schließlich eine weitere Ausführungsform der Verteilereinrichtung 1 in Form eines Wandverteilers dargestellt. Dabei wurde von einer gleichmäßigen Ausnutzung der drei Dienste ausgegangen. Die zugehörigen Aderanschlussmodule D1 - D3 sind dann abwechselnd in Reihen angeordnet, wobei zwischen zwei Reihen von Anschlussmodulen D1 - D3 jeweils eine Reihe von Anschlussmodulen TN der Teilnehmerleitungen angeordnet ist. Dieser Aufbau ist übersichtlicher, hat jedoch Nachteile, da hier teilweise diagonal rangiert werden muss.

## Patentansprüche

1. Verteilereinrichtung für die Telekommunikations- und Datentechnik, umfassend eine Vielzahl von Anschlussmodulen (TN) für Teilnehmerleitungen und eine Vielzahl von Anschlussmodulen (D1-D4) für Dienste, wobei über die Verteilereinrichtung (1) mindestens zwei verschiedene Dienste einer Teilnehmerleitung wahlweise zugeordnet werden können, wobei die Anschlussmodule (TN) der Teilnehmerleitungen mit den Anschlussmodulen (D1-D4) der Dienste elektrisch über Rangierverbindungen verbunden sind, wobei den verschiedenen Diensten jeweilige Anschlussmodule (D1-D4) zugeordnet sind,
**dadurch gekennzeichnet, dass**
die einzelnen Anschlussmodule (D1-D4) der verschiedenen Dienste abwechselnd unter Berücksichtigung ihrer jeweiligen Gesamtanzahl matrixförmig auf einer Anschlussseite der Verteilereinrichtung (1) angeordnet sind, wobei die Anschlussmodule (TN) für die Teilnehmerleitungen auf der gleichen Anschlussseite der Verteilereinrichtung (1) angeordnet sind wie die Anschlussmodule (D1-D4) für die Dienste, wobei zwischen zwei Anschlussmodulen (D1-D4) für die Dienste sowohl in vertikaler als auch in horizontaler Richtung jeweils ein Anschlussmodul (TN) der Teilnehmerleitungen angeordnet ist.

2. Verteilereinrichtung nach Anspruch 1, **dadurch gekennzeichnet, dass** mindestens einer der Dienste in verschiedene Sub-Dienste unterteilt ist, wobei den Sub-Diensten jeweils Anschlussmodule zugeordnet sind, wobei die Anschlussmodule der Sub-Dienste unter Berücksichtigung Ihrer jeweiligen Gesamtanzahl abwechselnd angeordnet sind.

3. Verteilereinrichtung nach einem der vorangegangenen Ansprüche, **dadurch gekennzeichnet, dass** mindestens ein Dienst und/oder ein Sub-Dienst verschiedenen Anbietern zugeordnet ist, wobei die Anschlussmodule der Dienste der verschiedenen Anbieter unter Berücksichtigung ihrer Gesamtanzahl abwechselnd an der Verteilereinrichtung (1) angeordnet sind.

4. Verteilereinrichtung nach einem der vorangegangenen Ansprüche, **dadurch gekennzeichnet, dass** die Anschlussmodule (D1-D4) mindestens eines Dienstes fest mit einer Elektronikeinheit (10) verkabelt sind.

## Claims

1. A distribution device (1) for telecommunications and data technology, comprising a large number of connecting modules (TN) for subscriber lines and a large number of connecting modules (D1-D4) for services, with it being possible for at least two different services to be optionally assigned to a subscriber line via the distribution device (1), the connecting modules (TN) of the subscriber lines being electrically connected to the conductor connecting modules (D1-D4) of the services via jumper connections, with respective connecting modules (D1-D4) being assigned to the different services, **characterized in that**
the individual connecting modules (D1 - D4) of the different services are arranged alternately, taking into consideration their respective total number, in the form of a matrix on a connecting side of the distribution device (1), wherein the connecting modules (TN) for the subscriber lines are arranged on the same connecting side of the distribution device (1) as the connecting modules (D1 - D4) for the services, with a respective connecting module (TN) of the subscriber lines being arranged between two connecting modules (D1 - D4) for the services, both in the vertical direction and in the horizontal direction.

2. The distribution device as claimed in claim 1, wherein at least one of the services is divided into different sub-services, with respective connecting modules being assigned to the sub-services, the connecting modules of the sub-services being arranged alternately, taking into consideration their respective total number.

3. The distribution device as claimed in one of the preceding claims, wherein at least one service and/or one sub-service is assigned to different providers, with the connecting modules of the services of the different providers being arranged alternately, taking into consideration their total number, on the distribution device (1).

4. The distribution device as claimed in one of the preceding claims, wherein the connecting modules (D1 - D4) of at least one service are permanently cabled to an electronics unit (10).

## Revendications

1. Dispositif répartiteur pour les télécommunications et l'informatique, comprenant une pluralité de modules de raccordement (TN) pour des lignes d'abonné et une pluralité de modules de raccordement (D1-D4) pour des services, au moins deux services différents pouvant être associés au choix à une ligne d'abonné par le biais du dispositif répartiteur (1), les modules de raccordement (TN) des lignes d'abonné étant reliés électriquement aux modules de raccordement (D1-D4) des services par le biais de liaison de connexion, des modules de raccordement (D1-D4) respectifs étant associés aux différents services, **caractérisé en ce que**
les modules de raccordement (D1-D4) individuels des différents services étant disposés en alternance en forme de matrice sur un côté de raccordement du dispositif répartiteur (1) en tenant compte de leur nombre total respectif, les modules de raccordement (TN) pour les lignes d'abonné étant disposés du même côté de raccordement du dispositif répartiteur (1) que les modules de raccordement (D1-D4) pour les services, un module de raccordement (TN) des lignes d'abonné étant respectivement disposé entre deux modules de raccordement (D1-D4) pour les services à la fois dans le sens vertical et dans le sens horizontal.

2. Dispositif répartiteur selon la revendication 1, **caractérisé en ce qu'**au moins l'un des services est subdivisé en différents sous-services, des modules de raccordement étant respectivement associés aux sous-services, les modules de raccordement des sous-services étant disposés en alternance en tenant compte de leur nombre total respectif.

3. Dispositif répartiteur selon l'une des revendications précédentes, **caractérisé en ce qu'**au moins un service et/ou un sous-service est associé à différents fournisseurs, les modules de raccordement des services des différents fournisseurs étant disposés en alternance sur le dispositif répartiteur (1) en tenant compte de leur nombre total.

4. Dispositif répartiteur selon l'une des revendications précédentes, **caractérisé en ce que** les modules de raccordement (D1-D4) d'au moins un service sont câblés à demeure avec une unité électronique (10).
